# EUROPEAN PATENT APPLICATION

(11) **EP 1 845 371 A1**
(43) Date of publication of application: **17.10.2007**
(21) Application number: 07007458.8
(22) Date of filing: 11.04.2007
(51) Int. Cl.: G01N 27/49, G01N 27/403, G01N 33/487

(54) **Electrochemical sensor strip and manufacturing method thereof**

(30) Priority: 11.04.2006 CN 200610074774
(71) Applicant: Zensor Corporation, Dali City Taichung County 412 (TW); Bionime Corporation, Dali City Taichung County 412 (TW)
(72) Inventor: Lyuu, Hueih-Jing, Dali City, Taichung County 412 (TW)
(74) Representative: Zimmermann, Tankred Klaus

(57) **Abstract**

An electrochemical sensor strip (10) is provided. The electrochemical sensor strip (10) includes an insulation substrate (1), a conduction film (2), an insulation layer (3), wherein the conduction film (2) is mounted on the insulation substrate (1) and has a first and a second ends (11, 12), and the insulation layer (3) is mounted on the conduction film (2) to cover the first end (11). The second end (12) serves as a signal output terminal, the first end (11) has a first conduction section (13) exposed between the insulation layer (3) and the insulation substrate (1), and the conduction section (13) serves as a working surface of an electrode of the electrochemical sensor strip (10).

## Description

The present invention relates to an electrochemical sensor strip and the manufacturing method thereof, and more particular to an electrochemical sensor strip for testing the contents such as the glucose, the cholesterol, the triglyceride, the uric acid the glycohaemoglobin (HbAlc), etc., of the biochemical sample, for testing the heavy metals such as lead, cadmium, mercury, copper, etc., of the fluid sample, and for various micro analyses.

Since the detection of the heavy metals and the detection for the biomedical fluid samples in various field are getting more and more important, lots of disposable electrochemical sensor strips for the detection of the biochemical samples have been developed. Take the electrochemical sensor strip disclosed in US Patent No. 6, 270,637 B1 and shown on Fig. 16 (A) for example, the metal strips 161 and 163 is adhered on the substrate 161, which are provided for servicing as the electrodes, by using a kind of glue; and an upper cover 164 is further adhered for forming a space for containing the chemical reagent.

Another sensor strip of US Patent No. 6,491,803B1 is illustrated on Fig. 16(B), where the conductive materials 168 and 169, for example the carbon, are printed on a non-conductive substrate 167 for serving as an electrode for the electrochemical sensor strip; and a non-conductive film material 170 is further adhered for providing a space for containing a fluid sample. The two mentioned patents use either the metal surface or the surface of the printed conductive material as the electrode regions 165, 166, 171 and 172 for the electrochemical reaction. Since the mentioned electrode regions are located on the surface of the metal strip or the conductive material, the respective superficial contents thereof are much larger than the transverse cross section of the metal strip or the conductive material. Accordingly, using the electrochemical sensor strips with such electrode regions for measuring, testing or detecting the fluid samples would need a large amount of fluid sample, which is not ideal.

Hence, for overcoming the problems of the large sample volume required for the conventional disposable electrochemical sensor strip, the applicant has devoted himself to develop another electrochemical sensor strip through a series of experiments, tests and researches and finally obtained a disposable electrochemical sensor strip with a tiny electrode contact surface and the manufacturing method thereof. In addition to effectively solving the problem of the large fluid sample required for a test in the prior arts, the present application also has the advantage of simplifying the manufacturing process for the electrochemical sensor strip and obtaining the convenience for using very small amount of sample. That is to say, the problem be solved by the present invention is focused on how to overcome the excessively large electrode where the fluid sample is located for more conveniently manufacturing the electrode, and on how to overcome the additional manufacturing for the electrode region required for the metal strip or the conductive material for improving and simplifying the process for manufacturing the electrochemical sensor strip. Accordingly, the complicated manufacturing process for the conventional electrochemical sensor strip is avoided; the tiny electrode superficial content is provided; and more importantly, the volume of the testing sample is reduced while the problem that how would a fluid sample arrive the testing location when flowing on the test strip is solved.

In accordance with an aspect of the present invention, a disposable electrochemical sensor strip is provided. The electrochemical sensor strip includes an insulation substrate, a first conduction film mounted on the insulation substrate and having a first and a second ends, and an insulation layer mounted on the first conduction film to cover the first end, wherein the second end serves as a signal output terminal, the first end has a first conduction section exposed between the insulation layer and the insulation substrate, and the first conduction section serves as a working surface of an electrode of the electrochemical sensor strip.

Preferably, the insulation layer is an insulation thin layer entirely covering the first end, the insulation layer is mounted on a first surface of the conduction film, the second end is a preserved conduction area not being covered by the insulation layer for serving as the signal output terminal, and the exposed first conduction section is a transverse cross section of the first conduction film.

Preferably, the electrochemical sensor strip further includes a second conduction film having a second conduction section exposed between the insulation layer and the insulation substrate, wherein the first conduction film is mounted on the insulation substrate by one selected from a group consisting of a printing, an evaporation, an electroplating and an adhering.

Preferably, the second conduction section serves as the working surface of the electrode of the electrochemical sensor strip with the first conduction section.

Preferably, the electrochemical sensor strip having a circular opening further includes a insulation piece mounted on the opening to form a fluid receiving portion for the strip, and a chemical agent mounted on the fluid receiving portion for chemically reacting with a sample to be tested, wherein the insulation substrate and the insulation film are respectively a non-conductive substrate and a disk-like film, the first and the second conduction films are arranged radiately from the opening by being adhered onto the non-conductive substrate, and an electrical signal generated from the chemical reaction is output from the electrode.

Preferably, the chemical agent is one selected from a group consisting of an enzyme, an antibody, an electrolyte, a thickening agent, a water and a protecting agent for a biological compound.

Preferably, the electrochemical sensor strip further includes a second and a third conduction films respectively having a second and a third conduction sections exposed between the insulation layer and the insulation substrate, wherein the insulation substrate is a high molecular weight polymer being one of a thermo plastic and a thermosetting plastic.

Preferably, the electrochemical sensor strip further includes a second conduction film and another insulation layer, wherein the second conduction film has a second conduction section exposed between the another insulation layer and the insulation substrate, and at least one of the insulation layers and the insulation substrate is a high molecular weight polymer being one of a thermo plastic and a thermosetting plastic.

Preferably, the first conduction section is obtained by one selected from a group consisting of a cutting, a stamping, a drilling, a water cutting, a laser cutting, a chemical etching, an optical lithography, a chemical dissolution, and a heat-melting process, and the electrode being processed is an ultramicroelectrode.

Preferably, the first conduction film is made of one selected from a group consisting of a metal, an oxide thereof, a complex thereof, and an alloy thereof, and the electrode is one selected from a group consisting of a working electrode, an auxiliary electrode, and a reference electrode.

Preferably, the metal is one selected from a group consisting of a carbon, a copper, a silver, a gold, a rhodium, a ruthenium, a manganese, an iron, a platinum, an osmium, a nickel, a cobalt, a mercury, an iridium, and a bismuth.

Preferably, the electrochemical sensor strip further includes a second conduction film mounted on the insulation substrate and having a third and a fourth ends, and another insulation layer mounted on the second conduction film, wherein the first and the second conduction films are mounted on a first and a second surfaces of the insulation substrate respectively, the fourth end serves as another signal output terminal, the fourth end has a second conduction section exposed between the another insulation layer and the insulation substrate for serving as the working surface of the electrode of the electrochemical sensor strip with the first conduction section.

Preferably, the electrochemical sensor strip further includes another insulation substrate, and a second conduction film mounted on the another insulation substrate and having a third and a fourth ends, wherein the insulation substrate is mounted on the second conduction film, the fourth end serves as another signal output terminal, the third end has a second conduction section exposed between the insulation substrates, and the second conduction section serves as the working surface of the electrode of the electrochemical sensor strip with the first conduction section.

Preferably, the electrochemical sensor strip further includes a third conduction film mounted between the insulation substrate and the insulation layer and has a third conduction section exposed therebetween.

Preferably, the electrochemical sensor strip further includes a second conduction film mounted between the insulation substrate and the insulation layer and having a third and a fourth ends; another insulation substrate mounted on the insulation layer; and a piece mounted on the insulation substrate, wherein the fourth ends serves as another signal output terminal, the third end has a second conduction section exposed between the insulation substrate and the insulation layer with the second conduction section serving as the working surface of the electrode of the electrochemical sensor strip with the first conduction section, the strip has an opening between the first and the second conduction sections, and the opening, the first and the second conduction sections are mounted between the piece and the another insulation substrate.

Preferably, the electrochemical sensor strip further includes the insulation substrate and the insulation layer respectively have a first slot and an insulation slot for forming the opening, and a fluid receiving portion is defined by the opening, the insulation substrate and the insulation layer for receiving a sample.

In accordance with another aspect of the present invention, a disposable electrochemical sensor strip is provided. The electrochemical sensor strip includes a conduction film having a first and a second ends and a first and a second surfaces, a first insulation layer mounted on the first surface of the conduction film, and a second insulation layer mounted on the second surface of the conduction film, wherein the second end serves as a signal output terminal, and the first end is mounted between the first and the second insulation layers for serving as a working surface of an electrode of the electrochemical sensor strip.

In accordance with a further aspect of the present invention, a method for manufacturing an electrochemical sensor strip is provided. The manufacturing method includes steps of providing an insulation piece; mounting a first conduction film having a first and a second ends on the insulation piece; partially mounting an insulation layer on the first conduction film for covering the first end and forming the second end as a first signal output terminal; and respectively separating a part of the first end and a part of the insulation layer covering thereon from the first end and the insulation layer for obtaining a first conduction section.

Preferably, the method further includes steps of mounting a second conduction film having a third and a fourth ends between the insulation piece and the insulation layer; and separating a part of the third end from the third end for obtaining a second conduction section, wherein the fourth end serves as a second signal output terminal, and the first and the second conduction sections serve as a working surface of an electrode of the electrochemical sensor strip.

Preferably, the separating step is performed by one selected from a group consisting of a cutting, a stamping, a drilling, a water cutting, a laser cutting, a chemical etching, an optical lithography, a chemical dissolution, and a heat-melting process.

In accordance with further another aspect of the present invention, a disposable electrochemical sensor strip is provided. The electrochemical sensor strip includes a conduction film having a first and a second surfaces; a first insulation layer partially mounted on the first surface of the conduction film, and a second insulation layer mounted on the second surface of the conduction film, wherein a first portion of the conduction film mounted between the first and the second insulation layers serves as a working surface of an electrode of the electrochemical sensor strip.

Preferably, a second portion of the conduction film mounted on the second insulation layer and not covered by the first insulation layer serves as a signal output terminal of the electrochemical sensor strip.

The above contents and advantages of the present invention will become more readily apparent to those ordinarily skilled in the art after reviewing the following detailed descriptions and accompanying drawings, in which:
Figs. 1(A)-1(C) are respectively the schematic exploded view, the schematic three dimensional view, and the schematic front view of a disposable electrochemical sensor strip according to the first embodiment of the present invention;
Figs. 2(A) and 2(B) are respectively the schematic three dimensional view and the schematic sectional view of a disposable electrochemical sensor strip according to the second embodiment of the present invention;
Figs. 2(C) and 2(D) are respectively the schematic three dimensional view and the schematic sectional view of a disposable electrochemical sensor strip according to the third embodiment of the present invention;
Figs. 3(A)-3(C) are respectively the schematic exploded view, the schematic three dimensional view, and the schematic front view of a disposable electrochemical sensor strip according to the fourth embodiment of the present invention;
Fig. 3(D) is a schematic exploded view of a disposable electrochemical sensor strip according to the fifth embodiment of the present invention;
Figs. 4(A) and 4(B) are respectively the schematic three dimensional view, and the schematic front view diagram of a disposable electrochemical sensor strip according to the sixth embodiment of the present invention;
Figs. 5(A)-5(C) are respectively the schematic exploded view, the schematic three dimensional view, and the schematic front view of a disposable electrochemical sensor strip according to the seventh embodiment of the present invention;
Fig. 6 is a schematic three dimensional view of a disposable electrochemical sensor strip according to the eighth embodiment of the present invention;
Fig. 7 is a schematic three dimensional view of a disposable electrochemical sensor strip according to the ninth embodiment of the present invention;
Figs. 8(A) and 8(B) are respectively the exploded view and the three dimensional view of the disposable electrochemical sensor strip of Fig. 7;
Figs. 9(A)-9(C) are respectively the schematic exploded view, the schematic three dimensional view, and the schematic enlarged view of the enlarge portion for a disposable electrochemical sensor strip according to the tenth embodiment of the present invention;
Fig. 10 is a schematic drawing showing the combination of the strip in Fig. 1, the reference electrodes and the counter electrode for detecting a biochemical sample;
Fig. 11(A) is a schematic three dimensional view of a disposable electrochemical sensor strip according to the eleventh embodiment of the present invention;
Fig. 11 (B) is a schematic three dimensional view of a disposable electrochemical sensor strip according to the twelfth embodiment of the present invention;
Fig. 12 is a diagram showing the voltage to current test result for detecting ferric cyanide by using a disposable electrochemical sensor strip according to the a preferred embodiment of the present invention;
Fig. 13 is a diagram showing the voltage to current test result for detecting ferric cyanide by using a disposable electrochemical sensor strip in the prior art;
Fig. 14 is a diagram showing the glucose concentration to current test result in human blood by using a disposable electrochemical sensor strip according to the other preferred embodiment of the present invention;
Fig. 15 is a diagram showing the voltage to current test result for detecting a heavy metal by using a disposable electrochemical sensor strip according to another preferred embodiment of the present invention; and

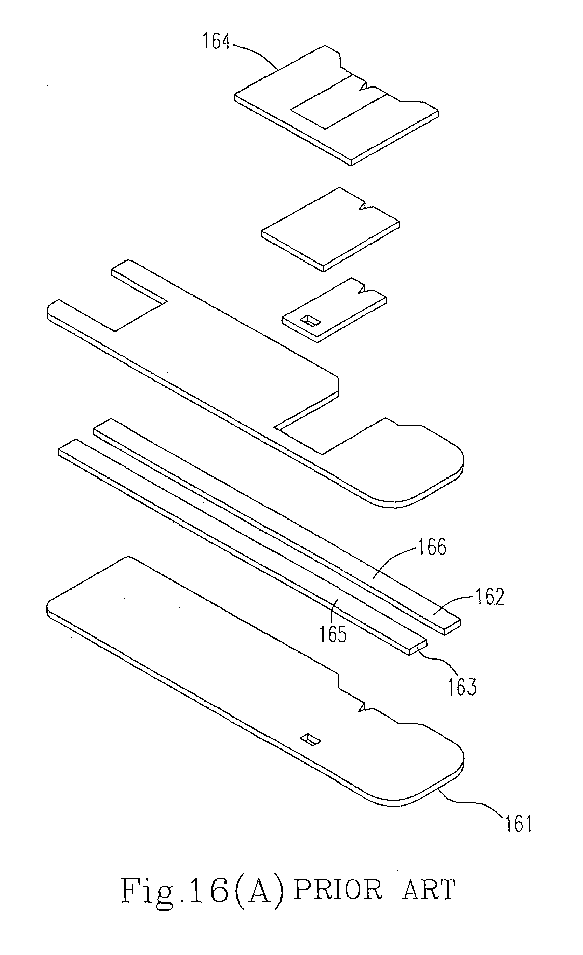

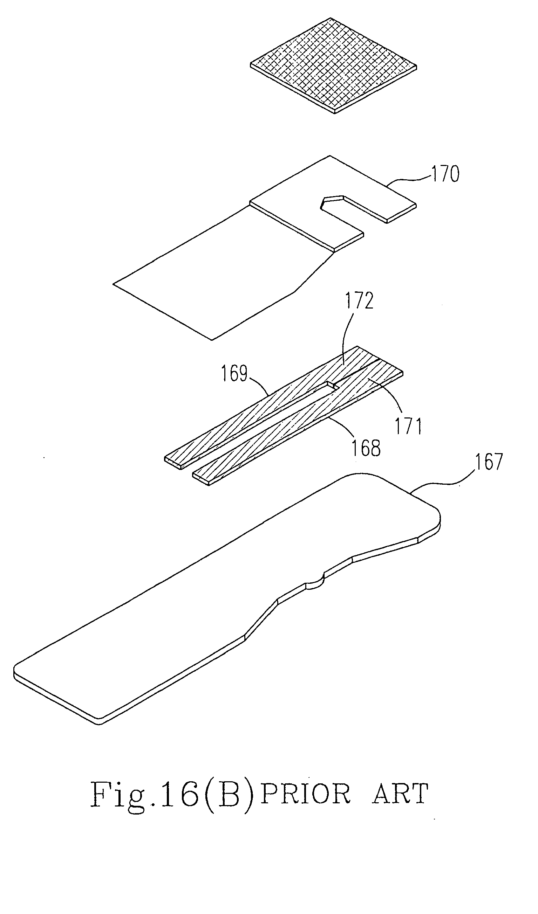

Figs. 16(A) and 16(B) are diagrams showing two kinds of disposable electrochemical sensor strips in the prior art.

The present invention will now be described more specifically with reference to the following embodiments. It is to be noted that the following descriptions of preferred embodiments of this invention are presented herein for purposes of illustration and description only; it is not intended to be exhaustive or to be limited to the precise form disclosed.

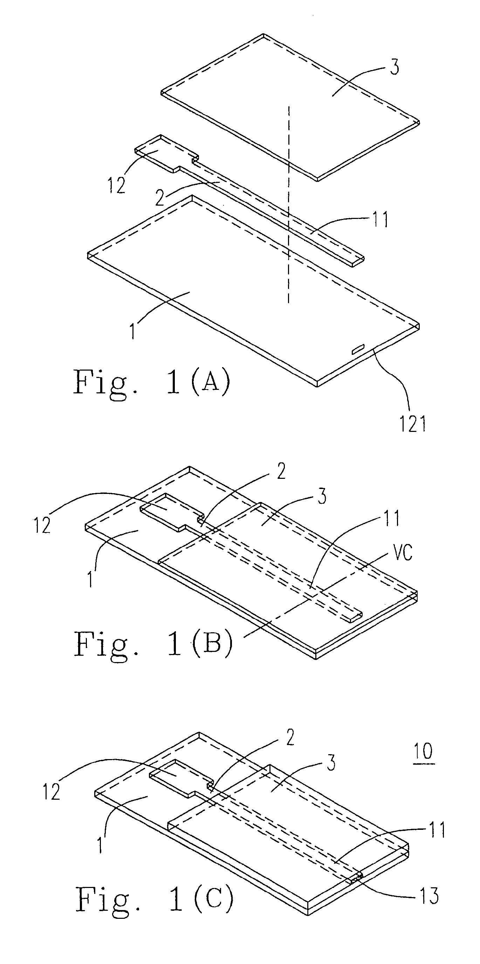

Please refer to Figs. 1(A)-1(C), which show a disposable electrochemical sensor strip according to a preferred embodiment of the present invention. The electrochemical sensor strip 10 includes an insulation sheet 1, a first conduction film 2 mounted on the insulation sheet, and a first insulation layer 3 mounted on the first conduction film 2, wherein the first conduction film has a first end 11 and a second end 12, the first insulation layer 3 covers the first end 11, and the second end 12 serves as a signal output terminal. The first end 11 is mounted between the insulation sheet 1 and the first insulation layer 3 with a first conduction section 13 exposed therebetween severing as a working surface of an electrode 13 of the electrochemical sensor strip 10.

The first insulation layer 3 of the electrochemical sensor strip 10 is an insulation film, which entirely covers the first end 11 of the first conduction film 2. The insulation sheet 1 is also a non-conductive substrate, and the insulation layer 3 is a non-conductive film adhered on the first conduction film 2. The second end 12 is a preserved conduction region which is not covered by the first insulation layer 3 for serving as the signal output terminal. As shown in Fig. 1(C), the exposed first conduction section 13 of the electrochemical sensor strip 10 is obtained from vertically cutting the strip 10. In addition, the first insulation layer 3 in Fig. 1(C) is a high molecular weight polymer being one of a thermo plastic or a thermosetting plastic. The first conduction section 13 is obtained by a physical or a chemical method. Alternatively, if the first conduction film 2 in Fig. 1 (A) of the present invention could be longitudinally extended, which is directly formed to an extent that the end of the first conduction film 2 is even with the end 121 of the insulation sheet 1, the first conduction section 13 which is required to be processed by the physical or the chemical method can be obtained.

The cutting technique for exposing the transverse cross section of the strip 10 in a physical way could be performed by a cutting, a stamping, a drilling, a water cutting, or a laser cutting, and then the exposed conduction section 13 could serve as a microelectrode of the present invention. The cutting for exposing the transverse cross section of the strip 10 could also be performed in a chemical way, such as a chemical etching, an optical lithography, a chemical dissolution, and a heat-melting process, and the processed electrode in the strip 10 is an ultramicroelectrode. The first conduction film 2 is made of a carbon, a copper, a silver, a gold, a rhodium, a ruthenium, a manganese, an iron, a platinum, an osmium, a nickel, a cobalt, a mercury, an iridium, or a bismuth. The first conduction film 2 is made of an oxide or a complex of a carbon, a copper, a silver, a gold, a rhodium, a ruthenium, a manganese, an iron, a platinum, an osmium, a nickel, a cobalt, a mercury, an iridium, or a bismuth. The first conduction film 2 is made of an alloy of a carbon, a copper, a silver, a gold, a rhodium, a ruthenium, a manganese, an iron, a platinum, an osmium, a nickel, a cobalt, a mercury, an iridium, or a bismuth. The electrode (i.e. the conduction section 13) is serving as a working electrode, an auxiliary electrode, or a reference electrode.

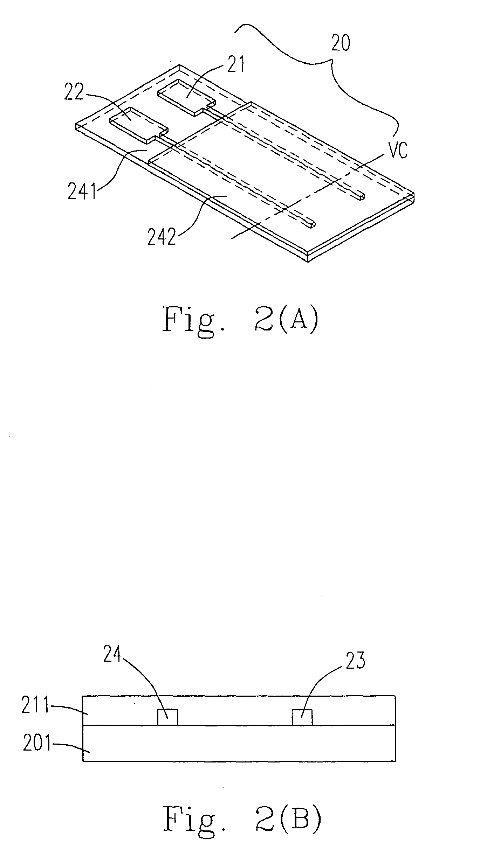

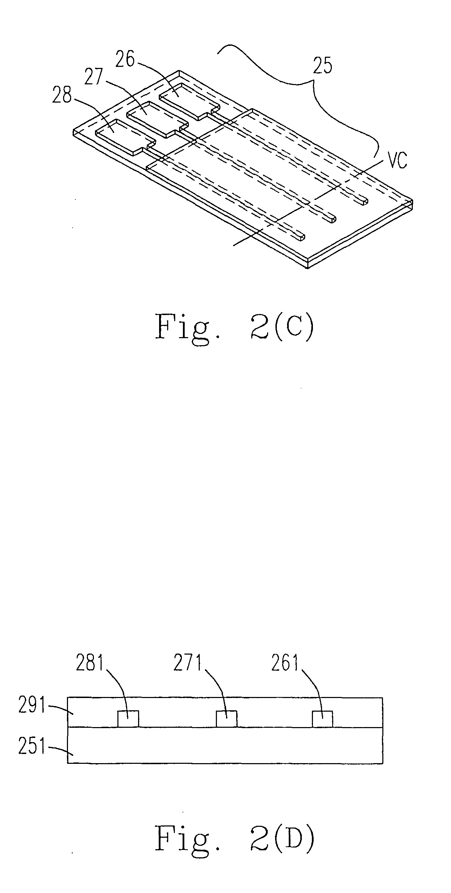

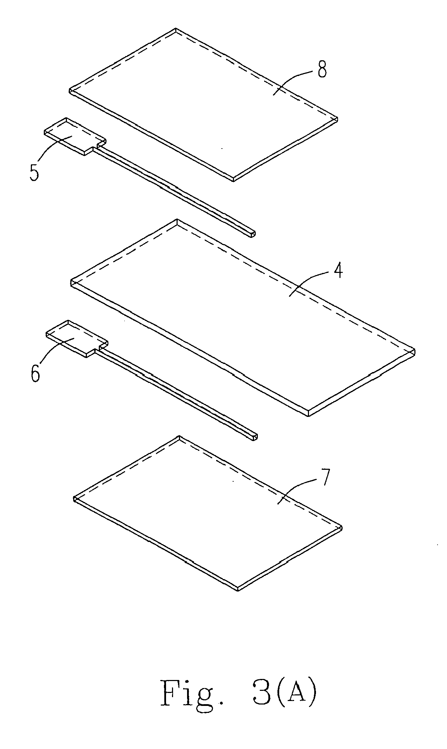

The configuration of the first conduction film 2 in the strip 10 of Fig. 1(A) and the configuration of the first conduction film 21 in the strip 20 of Fig. 2(A) are performed by a printing, an evaporation, an electroplating or an adhering. The strip 20 further includes a second conduction film 22, an insulation film 241, a first insulation layer 242, a first and a second conduction sections 23, 24 (as shown in Fig. 2(B)) exposed between the insulation film 241 and the first insulation layer 242, wherein the first and the second conduction sections 23, 24 are the anode and cathode for the strip 20, respectively. The first insulation layer 242 could be a non-conductive film adhered onto the first conduction film 21, the second conduction film 22 and the insulation film 241. The strips 20 is formed by transversely separating the strip for entirely exposing the cross section of the conduction films, wherein the exposed conduction sections 23 and 24 are the microelectrode of the present invention. In addition, the cross sections 201 and 211 of the insulation film 241 and the first insulation layer 242 respectively are illustrated in Fig. 2(B).

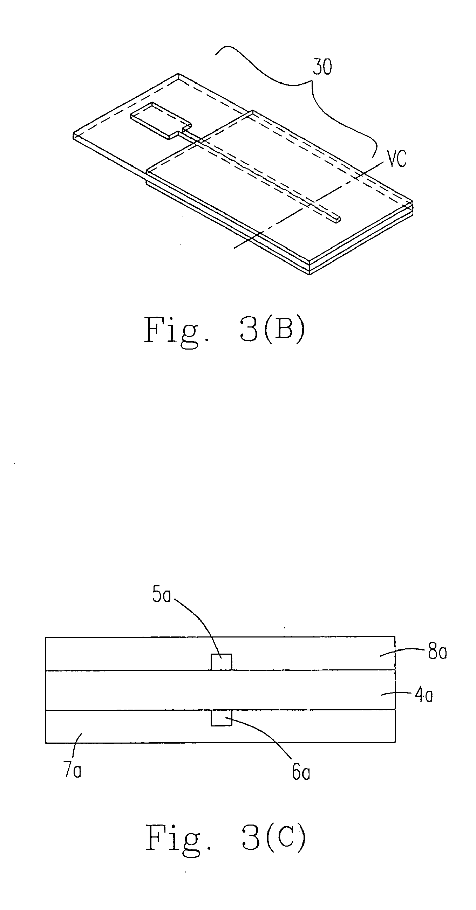

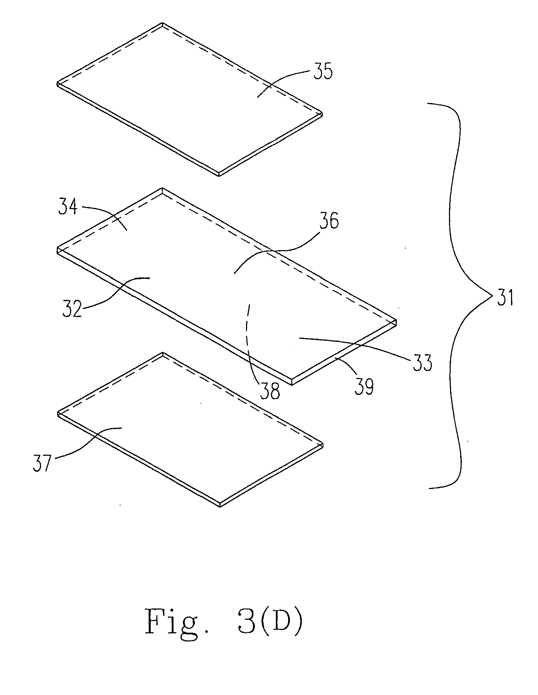

The insulation sheet 1 in Fig. 1(C) and the insulation film 1 of the strip 25 in Fig. 2(C) are made of the high molecular weight polymers. The strip 25 in Fig. 2(C) further includes a second and a third conduction films 27 and 28, a first insulation layer 291, and a first, a second and a third conduction sections 261, 271 and 281 (as shown in Fig. 2(D)) exposed between the insulation film 251 and the first insulation layer 291, which is an preferred embodiment with at least two coplanar electrodes according to the present invention. In addition, the cross sections of the insulation film 251 and the first insulation layer 291 are illustrated in Fig. 2(D). Please refer to Figs. 3(A)-3(B), compared with the strip 10 in Fig. 1(A), the strip 30 further includes a second conduction film 6 and a second insulation layer 7, where the strip 30 certainly includes an insulation film 4, a first insulation layer 8, and a first conduction film 5. After vertical cutting (VC), the first and the second conduction sections 5a and 6a for the strip 30, and the transversely cutting sections 4a, 7a and 8a for the insulation film 4, the second insulation layer 7 and the first insulation layer 8 respectively are exposed and could be seen in Fig. 3(C).

Please refer to Fig. 3(D), from a main technical view, the present invention provides a disposable electrochemical sensor strip 31. The strip 31 includes a conduction film 32 having a first end 33 and a second end 34, a first insulation layer 35 mounted on the first surface 36 of the conduction film 32, and a second insulation layer 37 mounted on the second surface 38 of the conduction film 32, wherein the second end 34 is configured as a signal output terminal; the first end 33 is mounted between the first and the second insulation layers 35 and 37 with a conduction section 39 thereof exposed between the first and the second insulation layers 35 and 37 for serving as a working surface of an electrode of the strip 31. As to other detailed descriptions for the conduction film 32, the first and the second insulation layers 35 and 37 in the strip 31, they are omitted since they are identical to those for the first conduction film 2 and the first insulation layer 3 which have been described before.

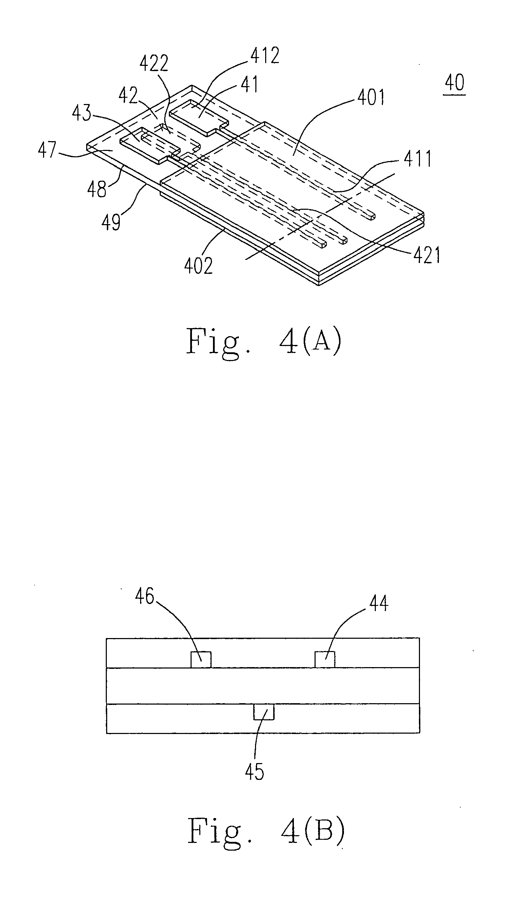

Please refer to Figs. 4(A) and 4(B), wherein another preferred disposable electrochemical sensor strip according to the present invention is provided. The disposable electrochemical sensor strip 40 includes an insulation substrate 47, a first conduction film 41 mounted on the first surface 48 of the insulation substrate 47 and having a first front end 411 and a first back end 412, a first insulation layer 401 mounted on the first conduction film 41, a second conduction film 42 mounted on the second surface 49 of the insulation substrate 47 (the second surface 49 and the first surface 48 are not in the same vertical level) and having a second front end 421 and a second back end 422, and a second insulation layer 402 mounted on the second conduction film 41, wherein the first and the second front ends 411 and 421 form a signal output signal and are respectively mounted between the insulation substrate 47 and the first insulation layer 401 and between the insulation substrate 47 and the second insulation layer 402, and the first and the second conduction sections 44 and 45 are respectively exposed between the insulation substrate 47 and the first insulation layer 401 and between the insulation substrate 47 and the second insulation layer 402 (as shown in Fig. 4(B)) for serving as a working surface of an electrode of the strip 40. The first and the second conduction sections 44 and 45 respectively serve as the anode and cathode. Certainly, the strip 40 could further includes a third conduction film 43, which is mounted on the first surface 48 of the insulation substrate 47, with a third conduction section 46 exposed between the insulation substrate 47 and the first insulation layer 401. Hence, Figs. 3 and 4 illustrate a preferred disposable electrochemical sensor strip with at least two non-coplanar electrodes according to the present invention. The first and the second insulation layer 401 and 402 are non-conductive films being cut for exposing the cross section of the strip, where the conduction sections 44, 45 and 46 are exposed and serve as the microelectrode of the strip 40. As to other detailed descriptions for the first, the second and the third conduction films 41, 42 and 43, the insulation substrate 47 and the first and the second insulation layers 401 and 402 in the strip 40, they are omitted since they are identical to those for the first conduction film 2, the insulation sheet 1 and the first insulation layer 3 which have been described before.

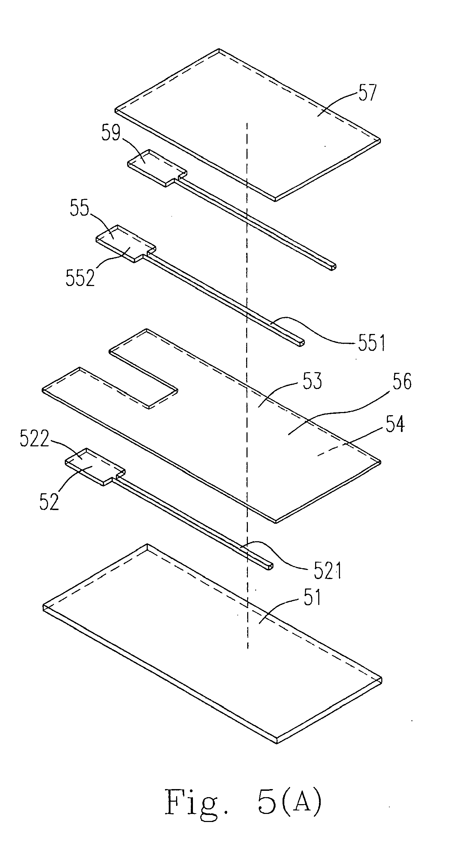

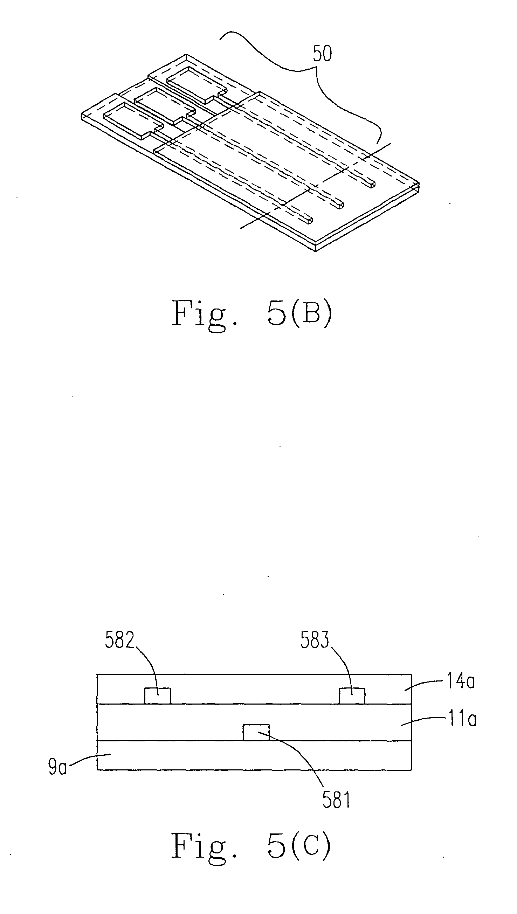

Please refer to Figs. 5(A) and 4(B), wherein another preferred disposable electrochemical sensor strip according to the present invention is provided. The disposable electrochemical sensor strip 50 includes a first insulation sheet 51, a first conduction film 52 mounted on the insulation substrate 51 and having a first front end 521 and a first back end 522, a second insulation sheet 53 mounted on the first conduction film 52 and having a first surface 54 and a second surface 56, a second conduction film 55 mounted on the second surface 56 of the second insulation sheet 53 and having a second front end 551 and a second back end 552, and an insulation layer 57 mounted on the second conduction film 55, wherein the first and the second back ends 522 and 552 form a signal output signal, the first and the second front ends 521 and 551 are respectively mounted between the insulation layer 57 and the first insulation layer 51 and between the insulation layer 57 and the second insulation layer 52, and the first and the second conduction sections 581 and 582 are respectively exposed between the insulation layer 57 and the first insulation layer 51 and between the insulation layer 57 and the second insulation layer 52 (as shown in Fig. 5(C)) for serving as a working surface of a counter electrode of the strip 50. After vertical cutting (VC), the first and the second conduction sections 9a and 11a and the transversely cutting section 14a for the insulation film are exposed and could be seen in Fig. 5(C). Certainly, the strip 50 could further include a third conduction film 59, which is mounted on the second surface 56 of the second insulation sheet 53, with a third conduction section 53 exposed between the insulation layer 57 and the second insulation sheet 53. Hence, Fig. 5 illustrates a preferred disposable electrochemical sensor strip with at least two coplanar electrodes according to the present invention. The insulation layer 57 is a non-conductive film being cut for exposing the cross section of the strip, where the cross section electrodes 581, 582 and 583 are exposed and serve as the microelectrode of the strip 50. As to other detailed descriptions for the first, the second and the third conduction films 52, 55 and 59, the first and the second insulation sheets 51 and 53, and the insulation layer 57 in the strip 50, they are omitted since they are identical to those for the first conduction film 2, the insulation sheet 1 and the first insulation layer 3 which have been described before.

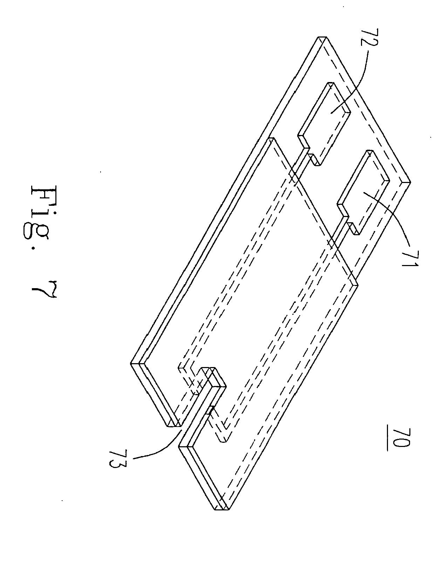

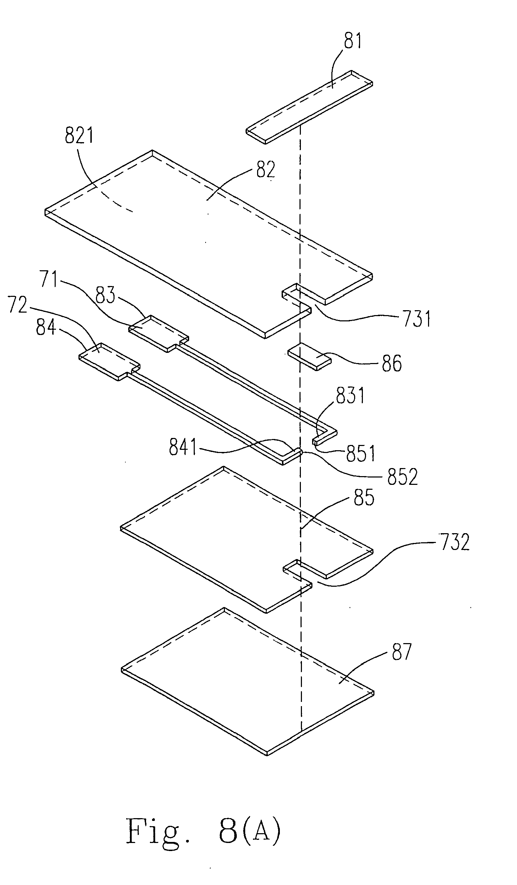

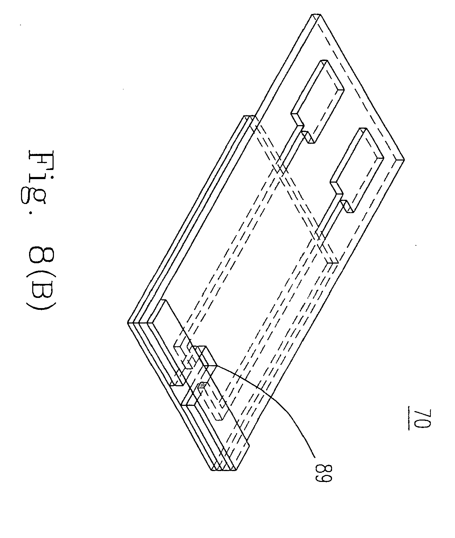

Please refer to Figs. 7, 8(A) and 8(B), another preferred disposable electrochemical sensor strip according to the present invention is provided. The disposable electrochemical sensor strip 70 for the detection of an analyte of a sample fluid includes a first insulation sheet 82, a first and a second conduction films 83 and 84 mounted on a first surface 821 of the first insulation sheet 82 and having respective electrode working terminals 831 and 841 and respective signal output terminals 71 and 72, an insulation film 85 mounted on the first and the second conduction films 83 and 84, wherein the electrode working terminals 831 and 841 are mounted between the first insulation sheet 82 and the insulation film 85, a first and a second conduction sections 851 and 852 and an opening 73 being exposed between the first insulation sheet 82 and the insulation film 85, wherein the first and the second conduction sections 851 and 852 serve as a working surface of an electrode of the strip 80, a second insulation sheet 87 being mounted on the first and the second conduction films 83 and 84 and the opening 73, and a cover 81 is mounted beneath the opening 73 to form a fluid receiving portion for measurement of the sample fluid. Certainly, the first insulation sheet 82 and the insulation film 85 respectively have a first slot 731 and an insulation slot 732. The long and narrow channel, i.e. the opening 73, in Fig. 7 is formed by the first slot 731 and an insulation slot 732. The opening 73 is formed by a die casting. As to other detailed descriptions for the first and the second conduction films 83 and 84, the first and the second insulation sheets 82 and 87, and the insulation layer 85 in the strip 70, they are omitted since they are identical to those for the first conduction film 2, the insulation sheet 1 and the first insulation layer 3 which have been described before.

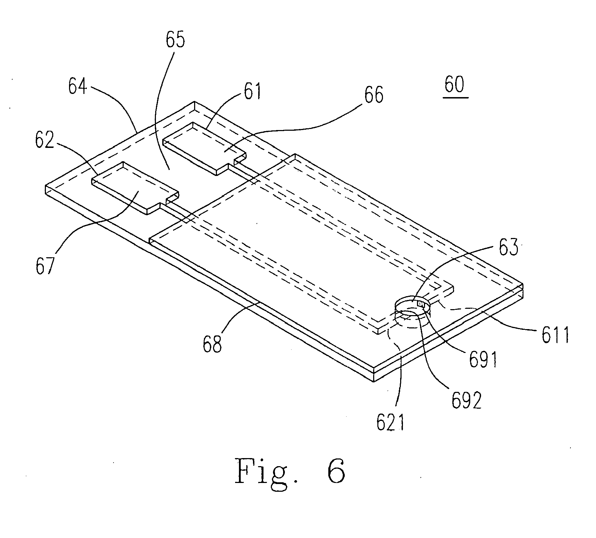

Please refer to Fig. 6, wherein another preferred disposable electrochemical sensor strip according to the present invention is provided. The disposable electrochemical sensor strip 60 for the detection of an analyte of a sample fluid includes a first insulation sheet 64 having a surface 65, a first and a second conduction films 61 and 62 mounted on the surface 65 respectively having the first ends 611 and 621 and the second ends 6 and 67, an insulation film 68 mounted on the first and the second conduction films 61 and 62, wherein the insulation film 68 covers the first ends 611 and 621, the second ends 66 and 67 form a signal output terminal, and the first ends 611 are mounted between the first insulation sheet 64 and the insulation film 68, and a first and a second conduction sections 691 and 692 are exposed between the first insulation sheet 64 and the insulation film 68, wherein the first and the second conduction sections 691 and 692 serve as a working surface of an electrode of the strip 80. Certainly, the first and the second conduction films 61 and 62 are formed by a printing, an evaporation, an electroplating and an adhering. The strip 60 includes a circular opening 63. As to other detailed descriptions for the first and the second conduction films 61 and 62, the first insulation sheet 64, and the insulation layer 68 in the strip 60, they are omitted since they are identical to those for the first conduction film 2, the insulation sheet 1 and the first insulation layer 3 which have been described before.

If the circular opening 63 of strip 60 in Fig. 6 is replaced with the long and narrow channel, i.e. the opening 73, in Fig. 7, the first and the second conduction films 61 and 62 are functionally corresponding to the first and the second conduction films 83 and 84. As shown in Fig. 8, the insulation layer 85 and the first insulation sheet 82 include the opening 73, and the strip 70 further includes a second insulation sheet 87 mounted on the first and the second conduction films 83 and 84 and the opening 73. The strip 70 further includes the cover 81 mounted beneath the opening 73 to form a fluid receiving portion for measurement of the sample fluid. The strip 70 further includes a chemical reagent 86 mounted within the opening 73 for chemically reacting with the alalyte and an electrical signal measured being output from the electrodes, i.e. the first and the second conduction sections 851 and 852, and the respective second ends 71 and 72. The sample fluid of the strip 70 is a sample to be tested, the opening 73 is a receiving portion for the sample. As shown in Fig. 8(B), the ground surface of the strip 70 is preserved with a gas exhaust opening 89, which facilitates the floating in the opening 73 for the sample fluid.

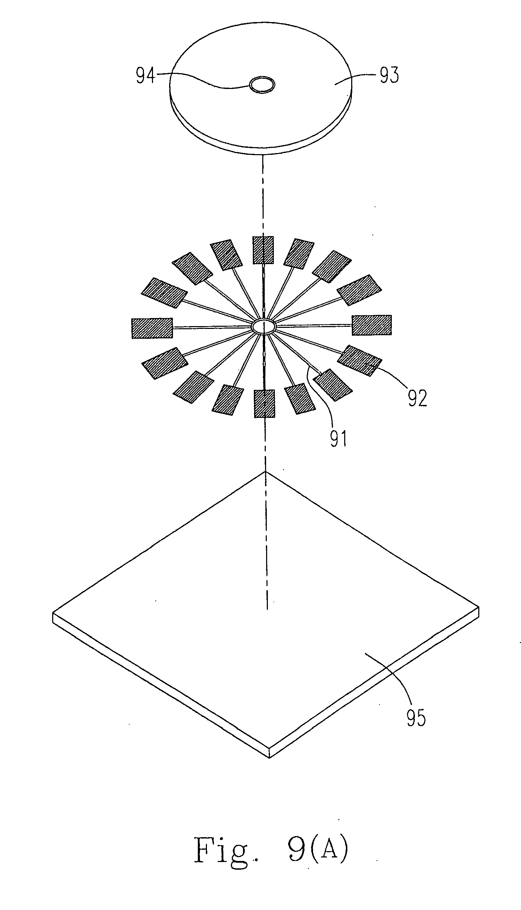

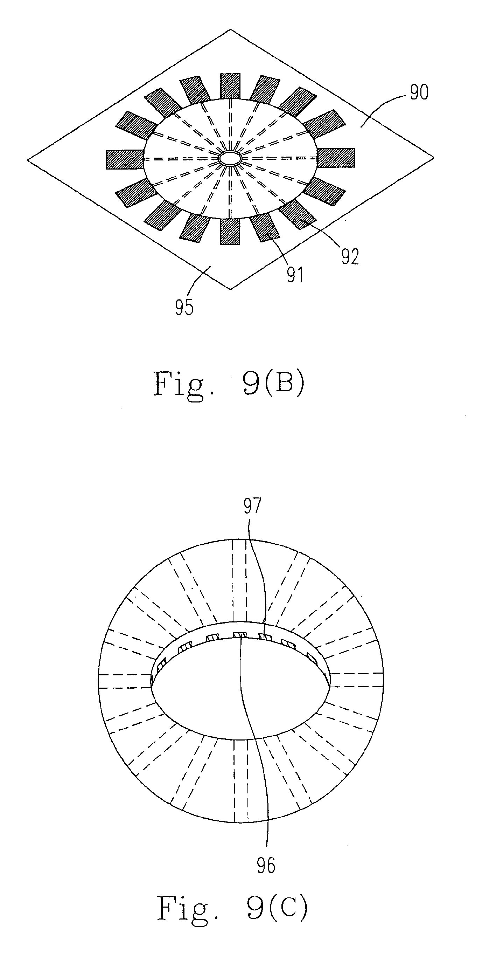

The physical way performed in the strip 60 is a cutting, a stamping, a drilling, a water cutting, or a laser cutting. The strips 60 and 70 as shown in Figs 6, 7 or 8 could form the electrode surfaces (the first conduction sections 691 and 851) by using a cutting technique, and the opening 73 and the circular opening 63 could also be formed accordingly. The circular opening 63 is able to absorb the chemical modifying material, such as the electrochemical signaling material, the redox reactant, etc., which is a material providing the signaling of the strips 60 and 70. In addition, if the circular opening 60 of the strip 60 is replaced with the central opening 94 of a circular plate in Fig. 9(B), the first and the second conduction films 61 and 62 are functionally corresponding to the first and the second conduction films 91 and 92 in Fig. 9(B). The first and the second conduction films 91 and 92 are obtained by a physical or a chemical method. The first insulation sheet 95 and the insulation layer 93 are respectively a non-conductive substrate and a circular-plate-formed non-conductive film. The first and the second conduction films 91 and 92 and the other plurality of conduction films (in the case that at least three electrodes are provided) are arranged radiately from the central opening 94 by being adhered onto the non-conductive substrate (the first insulation sheet 95), and an electrical signal generated from the chemical reaction is output from the electrode. The insulation layer 93 is adhered onto the first and the second conduction films 91 and 92. In Fig. 9(C), a more clearly position of the first and the second conduction sections 96 and 97 are illustrated. A serious of independently and conductive materials (such as the first and the second conduction sections 96 and 97) mounted in the same planar serve as the electrodes of a circular plate array. By using cutting or drilling techniques, the drilled cutting surface (the first conduction section 96) is exposed and serves as the microelectrode of the present invention.

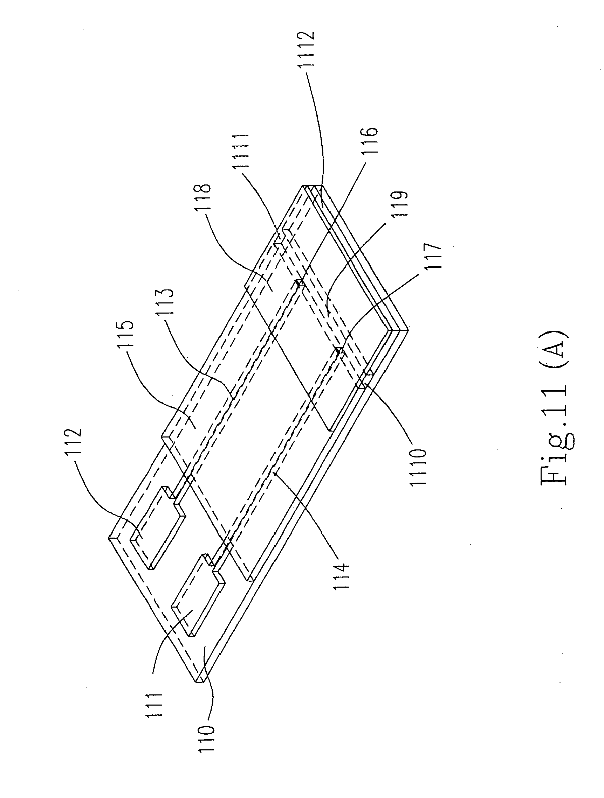

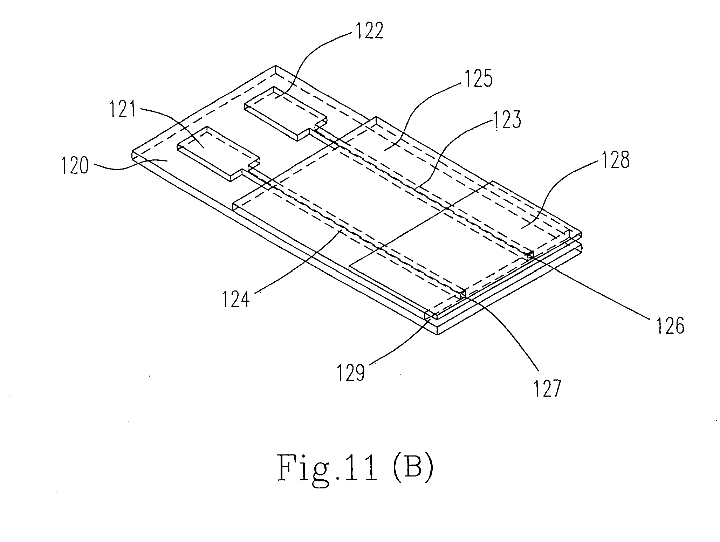

Further, the circular opening 63 of the strip 60 could be replaced with the long and narrow opening 119 of the strip 110 as shown in Fig. 11 (A). The strip 110 with the first and second conduction films 62 and 63, the second ends 66 and 67, the insulation layer 68 and the first and the second conduction sections 691 and 692 in Fig. 6 being respectively functionally corresponding to the first and second conduction films 113 and 114, the second ends 111 and 112, the insulation layer 115, and the first and the second conduction sections 117 and 116 in Fig. 11(A) further includes a terminal insulation layer 1112 and a cover 118 for forming the opening 119, which is a measuring area for the sample fluid, wherein the opening 119 includes a fluid receiving portion 1110 and a gas exhaust opening 1111. The terminal insulation layer 1112 of Fig. 11(A) could be omitted and could be replaced with a opening 129 of the strip 120 of Fig. 11(B), where the first and the second conduction films 113 and 114, the second ends 111 and 112, the insulation layer 115, the first and the second conduction sections 117 and 116, and the cover 118 in Fig. 11(A) are functionally correspondingly to the first and the second conduction films 123 and 124, the second ends 121 and 122, the insulation layer 125, the first and the second conduction sections 127 and 126, and the cover 128 in Fig. 11(B) respectively.

Please refer to Figs. 1(A)-1(C), wherein a preferred method for manufacturing a disposable electrochemical sensor strip 10 according to the present invention is provided. The method includes the steps of providing an insulation sheet 1; mounting a first conduction film 2 having a first and a second ends 11 and 12 on the insulation sheet 1; mounting a first insulation layer 3 on the first conduction film 2 for covering the first end 11 and forming the second end 12 as a first signal output terminal; and separating a part of the first end and a part of the first insulation layer covering thereon from the first end 11 and the first insulation layer 3 for obtaining a first conduction section 13. Accordingly, the separation of the strip 10 is performed by a cutting, a stamping, a drilling, a water cutting, a laser cutting, a chemical etching, an optical lithography, a chemical dissolution, or a heat-melting process.

Please refer to Fig. 6, wherein another preferred method for manufacturing a disposable electrochemical sensor strip 60 for detection of an analyte of a sample fluid according to the present invention is provided. The method includes the steps of providing an first insulation sheet 64 having a first surface 65; mounting a first and a second conduction films 61 and 62 on surface 65, wherein the first and the second conduction films 61 and 62 respectively have a first end 611 and 621 and a second end 66 and 67; mounting an insulation layer 68 on the first and the second conduction films 61 and 62 for covering the first ends 611 and 621 and forming the second ends 66 and 67 as a first signal output terminal; and separating a respective part of the first ends and a part of the first insulation layer covering thereon from the first ends 611 and 621 and the insulation layer 68 for obtaining a first and a second conduction sections 691 and 692, wherein the respective first and second conduction sections 691 and 692 are a working surface of an electrode.

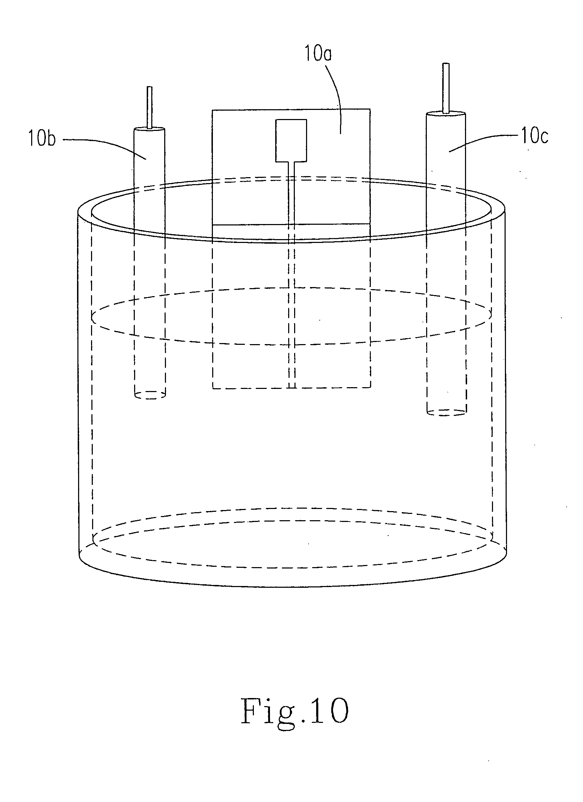

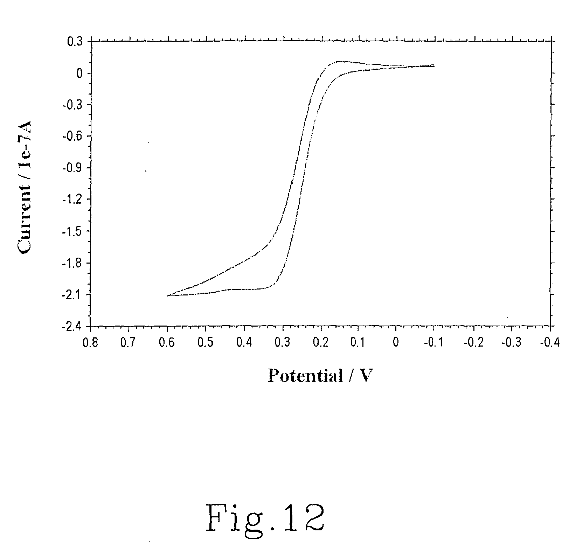

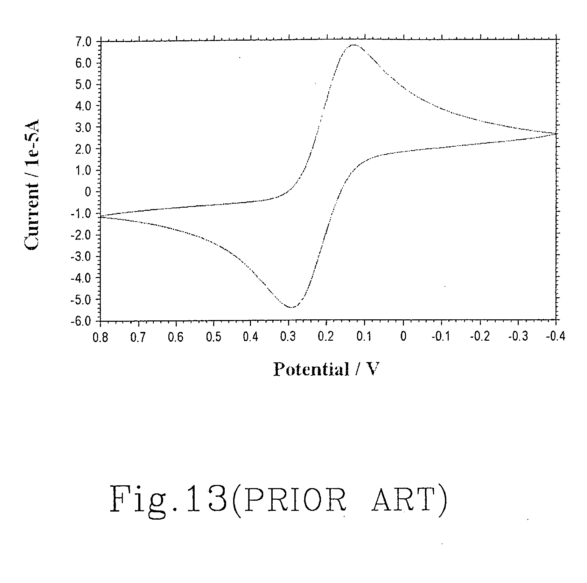

Please refer to Fig. 10, which illustrates an implementation of the electrochemical cyclic voltammetry. In Fig. 10, a measurement for detecting a biochemical sample by applying the strip 10a, which is identical to the strip 10 obtained in Fig. 1(c) with a microelectrode structure according to the present invention, an electrochemical analyzer and the device thereof, a reference electrode 10b, and a counter electrode 10c. By using the specific structure of the micro electrode 13, the reactant diffusion is highly reduced, which leads to a more obvious electrochemical detection. Please refer to Figs. 12 and 13, which are respectively the test results using a microelectrode according to the present invention and a conventional electrode, where the ferricyanide is 3mM, and the scanning speed is 50mV/s.

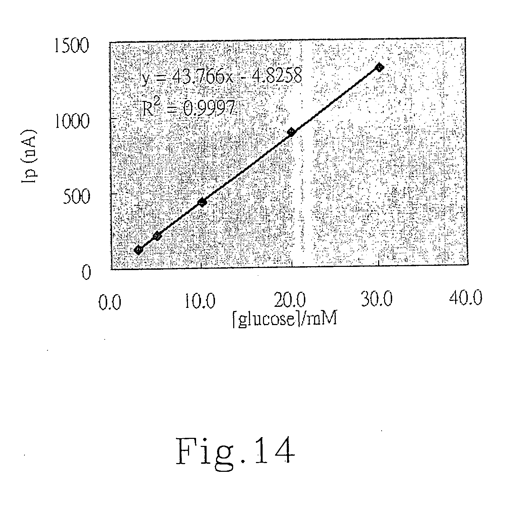

Please refer to Fig. 14, which is a test result for measuring the glucose concentration for a human blood sample by using a strip according to a preferred embodiment of the present invention. The test could be performed by the following method.
a. Electrode material: working electrode (Au), counter electrode or the reference electrode (Au)
b. Voltage applied: 0.2V
c. Chemical reagent lay on the electrode (the following content ratios show the weight ratio after dry)

| | |
|---|---|
| disodium hydrogen phosphate | 24% |
| Sodium Dihydrogen Phosphate | 20% |
| glucose oxidase | 9% |
| aphanitic alkyl ethly cellulose | 1% |
| potassium ferri cyanide | 46% |

d. Comparison equipment: YSI analyzer
e. Tested sample: glucose solutions
f. Tested sample concentration range: 2-30mM
g. Tested result: as shown in Fig. 14.

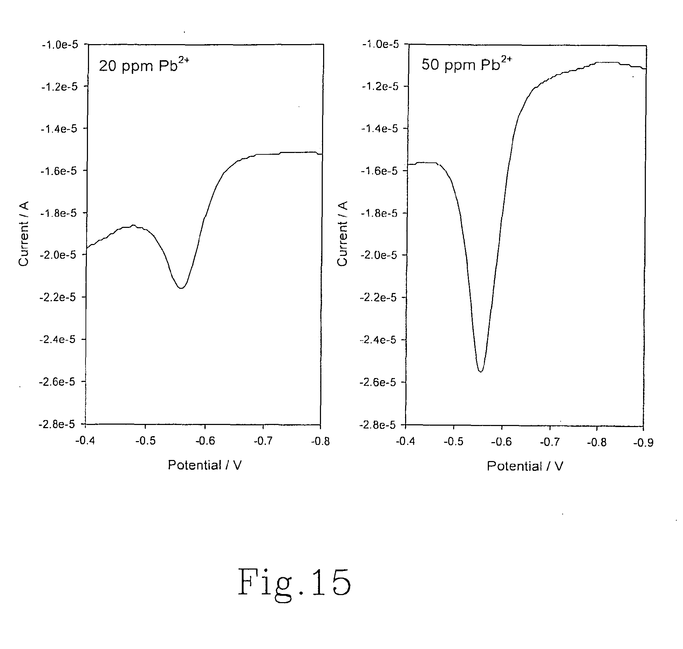

Please refer to Fig. 15, which is a test result for measuring the heavy metal ion concentration by using a strip according to a preferred embodiment of the present invention. The test could be performed by the following method.
a. Electrode material: working electrode - the electrode structure of the strip manufactured according to the present invention platted with a mercury film
b. Counter electrode: platinum electrode
c. Reference electrode: Ag/AgCl
d. Reaction solution: 0.1N nitric acid
e. Analysis method applied: the square-wave anodic stripping volummetry (SWASV) is applied for detection of 20 and 50 ppb lead ion
f. Test result: as shown in Fig. 15.

In view of the aforesaid, the present invention provides a novel disposable electrochemical sensor strip obtained by a transversely separation for exposing the conduction sections, which is directly provided as the electrode of the strip, wherein the additionally manufacturing of the electrode is omitted and the relevant sample volume required is reduced. Therefore, the present invention is extremely suitable for use in the industrial production.

## Claims

1. An electrochemical sensor strip (10, 20, 25, 30, 40, 50, 60, 70, 90, 110), **characterized in that**:
an insulation substrate (1, 241, 251, 4, 47, 53, 621, 82, 95);
a first conduction film (2, 21, 26, 5, 41, 55, 61, 83, 91, 113, 123) mounted on the insulation substrate (1, 241, 251, 4, 47, 53, 621, 82, 95) and having a first (11, 411, 551, 611, 831) and a second ends (12, 412, 552, 66, 71, 111, 121); and
an insulation layer (3, 242, 291, 8, 401, 57, 68, 85, 93, 115, 125) mounted on the first conduction film (2, 21, 26, 5, 41, 55, 61, 83, 91, 113, 123) to cover the first end (11, 411, 551, 611, 831),
wherein the second end (12, 412,552,66,71,111,121) serves as a signal output terminal, the first end (11, 411, 551, 611, 831) has a first conduction section (13, 23, 261, 5a, 44, 582, 691, 851, 96, 116, 127) exposed between the insulation layer (3, 242, 291, 8, 401, 57, 68, 85, 93, 115, 125) and the insulation substrate (1, 241, 251, 4, 47, 53, 621, 82, 95), and the first conduction section (13,23,261, 5a, 44, 582, 691, 851, 96, 116, 127) serves as a working surface (611, 831) of an electrode of the electrochemical sensor strip (10, 20, 25, 30, 40, 50, 60, 70, 90, 110).

2. An electrochemical sensor strip according to Claim 1, **characterized in that** the insulation layer (401) is an insulation thin layer entirely covering the first end (411), the insulation layer (401) is mounted on a first surface (48) of the conduction film (41), the second end (412) is a preserved conduction area not being covered by the insulation layer (401) for serving as the signal output terminal, and the exposed first conduction section (44) is a transverse cross section of the first conduction film (41).

3. An electrochemical sensor strip according to Claim 2, **characterized in that** the first conduction film (41) is mounted on the insulation substrate (47) by one selected from a group consisting of a printing, an evaporation, an electroplating and an adhering.

4. An electrochemical sensor strip according to Claim 2 **characterized by** comprising a second conduction film (43, 84, 62, 92, 114, 124) having a second conduction section (46, 852, 692, 97, 117, 127) exposed between the insulation layer (401, 85, 68, 93, 115, 125) and the insulation substrate (47, 621, 82, 95), wherein the second conduction section (46, 692, 852, 92, 117, 127) serves as the working surface (692, 841, 117) of the electrode of the electrochemical sensor strip (40) with the first conduction section (44, 116, 126).

5. An electrochemical sensor strip according to Claim 4 having an opening (63, 73, 94, 118, 129), **characterized by** comprising:
a insulation piece (87, 1112, 128) mounted on the opening (63, 73, 94, 118, 129) to form a fluid receiving portion (119) for the strip (60, 70, 110); and
a chemical agent (86) mounted on the fluid receiving portion (119) for chemically reacting with a sample to be tested,
wherein the insulation substrate (621, 82, 95) and the insulation film (68, 85, 93, 115) are respectively a non-conductive substrate and a disk-like film, the first and the second conduction films (61, 62, 91, 92, 113, 114, 124) are arranged radiately from the opening (63, 94, 118, 129) by being adhered onto the non-conductive substrate, and an electrical signal generated from the chemical reaction is output from the electrode.

6. An electrochemical sensor strip according to Claim 5, **characterized in that** the chemical agent (86) is one selected from a group consisting of an enzyme, an antibody, an electrolyte, a thickening agent, a water and a protecting agent for a biological compound.

7. An electrochemical sensor strip according to Claim 1 **characterized by** comprising a second (27) and a third (28) conduction films respectively having a second (271) and a third (281) conduction sections exposed between the insulation layer (291) and the insulation substrate (251), wherein the insulation substrate (251) is a high molecular weight polymer being one of a thermo plastic and a thermoset plastic.

8. An electrochemical sensor strip according to Claim 1 **characterized by** comprising a second conduction film (6, 42) and another insulation layer (7, 402), wherein the second conduction film (6, 42) has a second conduction section (6a, 45) exposed between the another insulation layer (7, 402) and the insulation substrate (4, 47), and at least one of the insulation layers (7, 8, 401, 402) and the insulation substrate (4, 47) is a high molecular weight polymer being one of a thermo plastic and a thermoset plastic.

9. An electrochemical sensor strip according to Claim 1, **characterized in that** the first conduction section (13, 23, 261, 5a, 44, 582, 691, 851, 96, 116, 127) is obtained by one selected from a group consisting of a cutting, a stamping, a drilling, a water cutting, a laser cutting, a chemical etching, an optical lithography, a chemical dissolution, and a heat-melting process, and the electrode being processed is an ultramicroelectrode.

10. An electrochemical sensor strip according to Claim 1, **characterized in that** the first conduction film (2, 21, 26, 5, 41, 55, 61, 83, 91, 113, 123) is made of one selected from a group consisting of a metal, an oxide thereof, a complex thereof, and an alloy thereof, and the electrode is one selected from a group consisting of a working electrode, an auxiliary electrode, and a reference electrode.

11. An electrochemical sensor strip according to Claim 10, **characterized in that** the metal is one selected from a group consisting of a carbon, a copper, a silver, a gold, a rhodium, a ruthenium, a manganese, an iron, a platinum, an osmium, a nickel, a cobalt, a mercury, an iridium, and a bismuth.

12. An electrochemical sensor strip according to Claim 1 **characterized by** comprising:
a second conduction film (42) mounted on the insulation substrate (47) and having a third and a fourth ends (421, 422); and
another insulation layer (402) mounted on the second conduction film (42),
wherein the first and the second conduction films (41, 42) are mounted on a first and a second surfaces (48, 49) of the insulation substrate (47) respectively, the fourth end (422) serves as another signal output terminal, the third end (421) has a second conduction section (45) exposed between the another insulation layer (402) and the insulation substrate (47) for serving as the working surface of the electrode of the electrochemical sensor strip with the first conduction section (44).

13. An electrochemical sensor strip according to Claim 1 **characterized by** comprising:
another insulation substrate (51); and
a second conduction film (52) mounted on the another insulation substrate (51) and having a third and a fourth ends (521, 522),
wherein the insulation substrate (53) is mounted on the second conduction film (52), the fourth end (522) serves as another signal output terminal, the third end (521) has a second conduction section (581) exposed between the insulation substrates (53, 51), and the second conduction section (581) serves as the working surface of the electrode of the electrochemical sensor strip with the first conduction section (582).

14. An electrochemical sensor strip according to Claim 13 **characterized by** comprising:
a third conduction film (59) mounted between the insulation substrate (53) and the insulation layer (57) and having a third conduction section (583) exposed therebetween.

15. An electrochemical sensor strip according to Claim 13 **characterized by** comprising:
a third conduction film mounted between the insulation substrates (53) and having a third conduction section (exposed therebetween.

16. An electrochemical sensor strip according to Claim 1 **characterized by** comprising:
a second conduction film (84) mounted between the insulation substrate (82) and the insulation layer (85) and having a third and a fourth ends (841, 72);
another insulation substrate (87) mounted on the insulation layer (85); and a piece (81, 118) mounted on the insulation substrate (82),
wherein the fourth ends (84) serves as another signal output terminal, the third end (841) has a second conduction section (852) exposed between the insulation substrate (82) and the insulation layer (85) with the second conduction section (852) serving as the working surface (841) of the electrode of the electrochemical sensor strip (70) with the first conduction section (851), the strip (70) has an opening (73) between the first and the second conduction sections (851, 852), and the opening (73), the first and the second conduction sections (851, 852) are mounted between the piece (81) and the another insulation substrate (87).

17. An electrochemical sensor strip according to Claim 16, **characterized in that** the insulation substrate (82) and the insulation layer (85) respectively have a first slot (731) and an insulation slot (732) for forming the opening (73), and a fluid receiving portion is defined by the opening (73), the insulation substrate (731) and the insulation layer (732) for receiving a sample.

18. An electrochemical sensor strip (31), **characterized in that**:
a conduction film (32) having a first and a second (33, 34) ends and a first and a second surfaces (3 6, 3 8);
a first insulation layer (35) mounted on the first surface (36) of the conduction film (32); and
a second insulation layer (37) mounted on the second surface (38) of the conduction film (32),
wherein the second end (34) serves as a signal output terminal, and the first end (33) is mounted between the first and the second insulation layers (35, 37) for serving as a working surface of an electrode (39) of the electrochemical sensor strip (31).

19. A method for manufacturing an electrochemical sensor strip (10), **characterized by** comprising steps of:
providing an insulation piece (1);
mounting a first conduction film (2) having a first and a second ends (11, 12) on the insulation piece (1);
partially mounting an insulation layer (3) on the first conduction film (2) for covering the first end (11) and forming the second end (12) as a first signal output terminal; and
respectively separating a part of the first end (11) and a part of the insulation layer (3) covering thereon from the first end (11) and the insulation layer (3) for obtaining a first conduction section (13).

20. A method according to Claim 18, **characterized in that** the separating step is performed by one selected from a group consisting of a cutting, a stamping, a drilling, a water cutting, a laser cutting, a chemical etching, an optical lithography, a chemical dissolution, and a heat-melting process.

21. An electrochemical sensor strip (10), **characterized in that**:
a conduction film (2) having a first and a second surfaces;
a first insulation layer (1) partially mounted on the first surface of the conduction film (2); and
a second insulation layer (3) mounted on the second surface of the conduction film (2);
wherein a first portion (11) of the conduction film (2) mounted between the first and the second insulation layers (1, 3) serves as a working surface of an electrode (13) of the electrochemical sensor strip (10).

22. An electrochemical sensor strip as claimed in Claim 21, **characterized in that** a second portion (12) of the conduction film (2) mounted on the second insulation layer (3) and not covered by the first insulation layer (1) serves as a signal output terminal of the electrochemical sensor strip (10).
